# EUROPEAN PATENT APPLICATION

(11) **EP 1 686 704 A2**
(43) Date of publication of application: **02.08.2006**
(21) Application number: 06001892.6
(22) Date of filing: 30.01.2006
(51) Int. Cl.: H04B 7/08

(54) **Vehicle-mounted receiving apparatus**

(30) Priority: 31.01.2005 JP 2005023847
(71) Applicant: ALPS ELECTRIC CO., LTD., Tokyo 145-8501 (JP)
(72) Inventor: Otaki, Yukio, Ota-ku Tokyo 145-8501 (JP); Ikeda, Tomoki, Ota-ku Tokyo 145-8501 (JP); Oyama, Toru, Ota-ku Tokyo 145-8501 (JP)
(74) Representative: Hirsch, Peter

(57) **Abstract**

Terrestrial digital broadcasting signals output from each of first low-noise amplifiers are input to a first reception processing unit through separate cables, satellite signals output from a second low-noise amplifier are input to a second reception processing unit through a first cable. When only the level of a first electric wave is equal to or greater than a predetermined value, the level of the terrestrial digital broadcasting signals to be input to at least one of the first low-noise amplifiers is lowered or becomes zero. The terrestrial digital broadcasting signals are input to at least the other of the first low-noise amplifiers without changing the level of the terrestrial digital broadcasting signal, independently of level changes of the first electric wave.

## Description

### BACKGROUND OF THE INVENTION

### 1. Field of the Invention

The present invention relates to a vehicle-mounted receiving apparatus, such as a vehicle-mounted television or a portable television, which can be viewed during movement.

### 2. Description of the Related Art

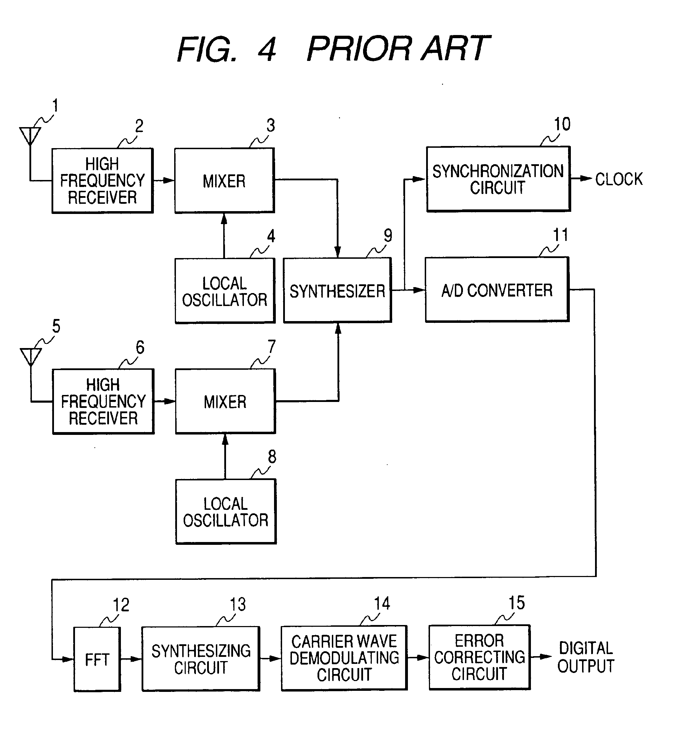

A vehicle-mounted diversity receiving apparatus according to the related art will be described with reference to Fig. 4. High frequency signals of an OFDM (orthogonal frequency division multiplexing) system of the same frequency that are received by reception antennas 1 and 5 are respectively amplified by high frequency receivers 2 and 6, and are then input to mixers 3 and 7. Local oscillation signals, which are different from each other but of mutually adjacent frequencies, are applied to the mixers 3 and 7 from local oscillators 4 and 8. For this reason, the mixers 3 and 7 output intermediate frequency signals which are different from each other but of mutually adjacent frequencies. The intermediate frequency signals output from the respective mixers 3 and 7 are synthesized by a synthesizer 9. After the synthesized signals are output from the synthesizer 9, a clock to be used in the receiving apparatus is regenerated by a synchronization circuit 10, and digital signals are obtained by an A/D converter 11.

The digital signals are converted into signals corresponding to carrier waves of the respective frequencies that form the OFDM signals by means of an FFT 12, and are then adapted to perform diversity synthesis by a synthesizing circuit 13. Then, the digital signals are demodulated by a carrier wave demodulating circuit 14 for each carrier wave. In addition, after an error correction is performed by an error correcting circuit 15, the digital signals are output as digital output data (for example, see JP-A-2000-041020 (Fig. 1)).

When the above-described diversity receiving apparatus is mounted on a vehicle so as to receive television signals and signals such as GPS signals, each of the antennas is mounted on a front glass of the vehicle, and the antennas are connected to a receiving apparatus main body inside the vehicle through cables.

When a receiving apparatus mounted on a moving body receives television signals, a range of changes in the electric field intensity caused by movement is so large that the electric field intensity changes within a range of + 10 dBm to - 90 dBm. For this reason, when OFDM-modulated signals, such as terrestrial digital television signals, having a number of carriers, are received in a strong electric field region, the distortion occurs in an amplifier provided in a high frequency receiver. Accordingly, a carrier-to-noise ratio (C/N) is deteriorated, so that a reception error occurs.

In addition, when GPS signals other than the television signals are received, the number of cables connecting the antenna and the receiving apparatus main body increases, so that it is difficult to mount the entire apparatus in the moving body.

### SUMMARY OF THE INVENTION

The present invention has been finalized in view of the drawbacks inherent in the conventional antenna, and it is an object of the present invention to provide a vehicle-mounted receiving apparatus in which reception sensitivity is improved when signals are received in a weak electric field region, reception errors are prevented by reducing distortion in a strong electric field region, and the mounting of an entire apparatus is simplified when a plurality of signals are received.

According to an aspect, there is provided a vehicle-mounted receiving apparatus which includes at least two first antennas that receive a first electric wave for terrestrial digital broadcasting; first low-noise amplifiers that are respectively disposed so as to correspond to the first antennas; a first reception processing unit that synthesizes terrestrial digital broadcasting signals output from the respective first low-noise amplifiers at the highest ratio; a second antenna that receives a second electric wave transmitted from a satellite with a frequency different from the first electric wave; a second low-noise amplifier that is disposed so as to correspond to the second antenna; and a second reception processing unit that processes satellite signals output from the second low-noise amplifier. The terrestrial digital broadcasting signals output from the respective first low-noise amplifiers are input to the first reception processing unit through separate cables. The satellite signals output from the second low-noise amplifier are input to the second reception processing unit through one of the cables. When only the level of the first electric wave is equal to or greater than a predetermined value, the level of the terrestrial digital broadcasting signals to be input to at least one of the first low-noise amplifiers is lowered or becomes zero, and the terrestrial digital broadcasting signals are input to at least the other of the first low-noise amplifiers without changing the level of the terrestrial digital broadcasting signal, independently of level changes of the first electric wave.

Preferably, a variable attenuator is disposed on a front end of at least one of the first low-noise amplifiers, an AGC voltage generating circuit is disposed in the first reception processing unit, the AGC voltage generating circuit generating an AGC voltage whose voltage changes when the level of the first electric wave is equal to or greater than the predetermined value, and attenuation of the variable attenuator is controlled by the AGC voltage.

Preferably, a bypass circuit for bypassing the first low-noise amplifier is provided in at least one of the first low-noise amplifiers so as to be parallel to the corresponding low-noise amplifier. When only the level of the first electric wave is equal to or greater than the predetermined value, the terrestrial digital broadcasting signals are not input to at least one of the first low-noise amplifiers and are output through the bypass circuit.

Preferably, a unitized antenna module has at least the first and second low-noise amplifiers, and a power supply unit for superimposing a power supply voltage on one of the cables is disposed at the output side of the corresponding cable, and a power is supplied to each of the first and second low-noise amplifiers through the corresponding cable.

Preferably, the second antenna is an antenna that receives a GPS electric wave, and the second antenna is provided in the antenna module.

Preferably, the antenna module and the first antennas are mounted on an inner side of a front glass or a rear glass of a vehicle.

Preferably, two of the first antennas are provided, and the two first antennas are separately mounted on both sides of the antenna module.

### BRIEF DESCRIPTION OF THE DRAWINGS

Fig. 1 is a block diagram of a vehicle-mounted receiving apparatus according to a first embodiment of the present invention;
Fig. 2 is a diagram illustrating a mounting state of the vehicle-mounted receiving apparatus according to the present invention;
Fig. 3 is a block diagram of a vehicle-mounted receiving apparatus according to a second embodiment of the present invention;
Fig. 4 is a block diagram of a vehicle-mounted receiving apparatus according to the related art;
Fig. 5 is a block diagram of a vehicle-mounted receiving apparatus according to a third embodiment of the present invention; and.
Fig. 6 is a block diagram of a vehicle-mounted receiving apparatus according to a fourth embodiment of the present invention.

### DESCRIPTION OF THE PREFERRED EMBODIMENT

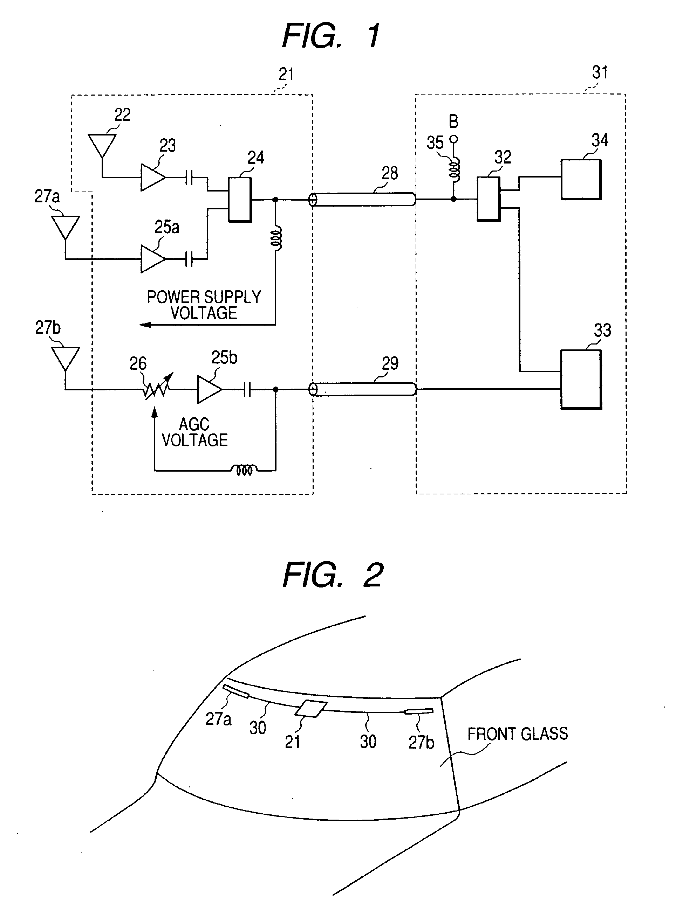

A vehicle-mounted receiving apparatus according to a first embodiment of the invention will be described with reference to Fig. 1. An antenna module 21, which is mounted on an inner side of a front glass or a rear glass of a vehicle, includes a second antenna 22, a second low-noise amplifier 23 (hereinafter, referred to as LNA) connected to the second antenna 22, a multiplexer 24, a plurality of first LNAs 25 (two LNAs 25a and 25b illustrated in Fig. 1), and a variable attenuator 26 provided at the front end of the first LNA 25b. Further, in the front glass or the rear glass on which the antenna module 21 is mounted, a plurality of first antennas 27 (two first antennas 27a and 27b illustrated in Fig. 1) are mounted. Even though the first antennas 27 are respectively connected to the first LNAs 25 provided in the antenna module 21, the variable attenuator 26 is provided on the front end of at least one first LNA 25b, and at least the other first LNA 25a is directly connected to the antenna 27a.

The second antenna 22 is designed to receive a second electric wave transmitted from a satellite, for example, a GPS electric wave (an electric wave of 1.5 GHz radiated from a GPS satellite for identifying positions and directions). The second electric wave signals (for example, a satellite signal, such as a GPS signal), which is received by the second antenna 22, is input to one multiplexing input terminal of the multiplexer 24 through the second LNA 23.

In addition, each of the first antenna 27 receives a first electric wave for terrestrial digital broadcasting (television broadcasting or sound broadcasting). Therefore, the frequency of the first electric wave is lower than that of the second electric wave. The frequencies change, corresponding to reception channels, up to several tens of times of the initial range of the frequencies in accordance with receptions channels. In addition, a signal (terrestrial digital broadcasting signal) of the first electric wave, which received by one of the first antennas 27 (the first antenna 27a illustrated in Fig. 1), is input to the other multiplexing input terminal of the multiplexer 24 through the first LNA 25a. Since a first cable 28 is connected to a multiplexing output terminal of the multiplexer 24, a signal multiplexed in the multiplexer 24 is transmitted to the first cable 28. Further, a signal (terrestrial digital broadcasting signal) of the first electric wave received by the other of the first antennas 27 (the first antenna 27b illustrated in Fig. 1) is input to the first LNA 25b through the variable attenuator 26. The terrestrial digital broadcasting signal output from the first LNA 25b is transmitted to a second cable 29.

Fig. 2 is a diagram illustrating a first example of mounting positions at which the antenna module 21 and the first antennas 27 are mounted on the front glass. The antenna module 21 is mounted on the upper middle part of the front glass so as not to obstruct the driver. The first antennas 27a and 27b are separately mounted on both sides of the antenna module 21 on the front glass. The first antennas 27 are connected to the antenna module 21 by means of an antenna cable 30.

Referring back to Fig. 1, a receiving apparatus main body 31 is disposed inside the vehicle. A demultiplexer 32, a first reception processing unit 33, and a second reception processing unit 34 are disposed inside the receiving apparatus main body 31. The demultiplexer 32 is connected to an output terminal of the first cable 28. One demodulating output terminal for outputting a satellite signal is connected to the second reception processing unit 34. The other demodulating output terminal for outputting a terrestrial digital broadcasting signal is connected to the first reception processing unit 33. In addition, an output terminal of the second cable 29 is connected to the first reception processing unit 33.

The first reception processing unit 33 has a channel selecting unit (tuner) of a plurality of systems (two systems in Fig. 1 an OFDM demodulating unit which is connected to the channel selecting unit in a cascading manner, and a synthesizing unit which synthesizes each OFDM demodulation signal at the highest ratio (in which the ratio C/N is the highest), all of which are not shown.

In addition, the second reception processing unit 34 has a function of processing a GPS signal. Therefore, in a system between the second antenna 22 and the second reception processing unit 34, at least both the second antenna 22 and the second reception processing unit 34 are formed so as to have a structure corresponding to a GPS. That is, if the second antenna 22 receives a GPS electric wave, the second reception processing unit 34 has a function of processing a GPS signal.

Further, the first reception processing unit 33 is provided with an AGC voltage generating circuit (not shown) which outputs an AGC voltage whose voltage changes when only the level of the first electric wave is equal to or greater than a predetermined value. The AGC voltage is superposed on the second cable 29 so as to be supplied to the variable attenuator 26. Further, the receiving apparatus main body 31 is provided with a power supply unit 35 (choke inductor) so as to superimpose a power supply voltage B on any cable (the first cable 28 in Fig. 1). The power supply voltage superimposed on the first cable 28 is supplied to each of the first and second LNAs 25 and 23 inside the antenna module 21.

With the above-described construction, a terrestrial digital broadcasting signal received by one (the first antenna 27a) of the first antennas 27 and a satellite signal received by the second antenna 22 are output to the receiving apparatus main body 31 through the common first cable 28. Therefore, the number of the cables for connecting the antenna module 21 and the receiving apparatus main body 31 can be reduced by one.

Further, in a reception system having at least one first LNA 25b, the AGC voltage maintains at a predetermined value when the level (electric field intensity) of the first electric wave is lower than a predetermined value, and a terrestrial digital broadcasting signal is not attenuated and is then input to the first LNA 25b. Then, an amplified signal is input to the first reception processing unit 33 through the second cable 29 and is then subjected to the OFDM demodulation. The terrestrial digital broadcasting signal, which is received by the first antenna 27a corresponding to at least the other first LNA 25a, is amplified by the first LNA 25a and is then input to the second reception processing unit 34 through the first cable 28. After that, the terrestrial digital broadcasting signal is subjected to the OFDM demodulation. Further, since each of demodulation signals is synthesized at the highest ratio, the sensitivity of the receiving apparatus serving as the diversity receiving apparatus is improved.

Furthermore, when the electric field intensity is higher than a predetermined value, attenuation of the variable attenuator 26 increases in accordance with the value of the reception intensity by means of the AGC voltage, and the attenuated terrestrial digital broadcasting signals are input to the first LNA 25b. Therefore, since the distortion can be prevented in the first LNA 25b, the carrier-to-noise ratio (C/N) is not deteriorated in a tuner inside the first reception processing unit 31, and reception errors do not occur after the demodulation stage. In addition, since the first antenna 27a receives signals at all times independently of the magnitude of the electric field intensity, even though the electric field intensity becomes weak, out of synchronization does not occur in the synthesizing stage after the OFDM demodulation.

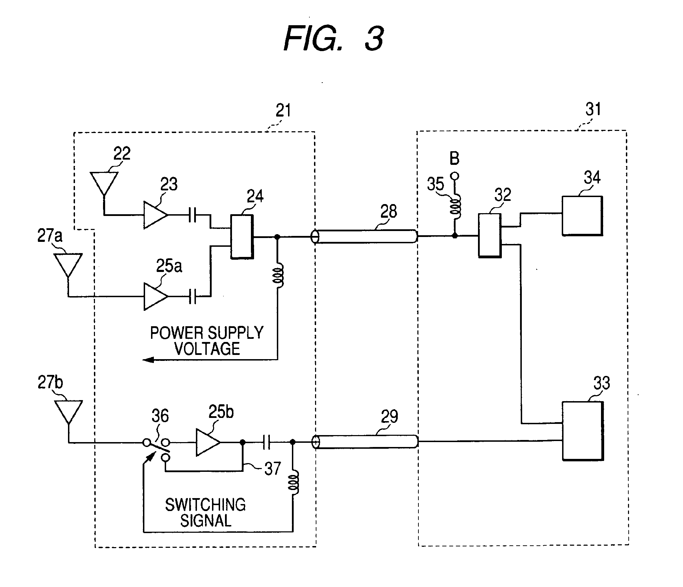

Fig. 3 illustrates a second embodiment of the invention. In Fig. 3, the variable attenuator 26 shown in Fig. 1 is omitted. Instead of the variable attenuator 26, a switching unit 36 and a bypass circuit 37 provided in parallel to the first LNA 25a are provided. With the switching mean 36, the first antenna 27b is connected to the first LNA 25b or the bypass circuit 37. In addition, even though not shown, a comparison circuit is provided in the first reception processing unit 33. This comparison circuit outputs switching signals for controlling the switching operation of the switching unit 36, and it is superimposed on the second cable 29. The other structure according to the second embodiment is the same as that shown in Fig. 1.

As described with reference to Fig. 3, one cable can be saved, as in the first embodiment illustrated in Fig. 1. Further, when the level of the first electric wave is lower than a predetermined value, the first antenna 27b is connected to the first LNA 25b by means of the switching unit 36. Therefore, terrestrial digital broadcasting signals received by the first antenna 27b are amplified by the first LNA 25b, are input to the first reception processing unit 33 through the second cable 29, and are subjected to the OFDM demodulation. Furthermore, since the other first antenna 27a receives the first electric wave at all times independently of the amplitude of the electric field intensity, out of synchronization does not occur in the synthesizing stage after the OFDM demodulation, so that the reception sensitivity is improved.

When the level of the first electric wave is equal to or greater than a predetermined value, the first antenna 27b is connected to the bypass circuit 37 by means of the switching unit 36. Therefore, the terrestrial digital broadcasting signals received by the first antenna 27b are not input to the first LNA 25b, and are output through the bypass circuit 37. Accordingly, even though the electric field intensity increases, the distortion can be prevented by the first LNA 25b, and the C/N is not deteriorated in the first reception processing unit 33, so that reception errors do not occur after the demodulation stage.

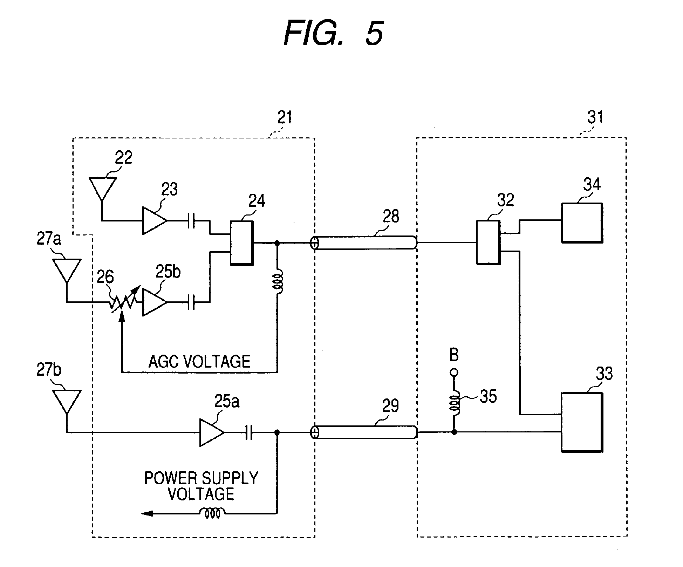

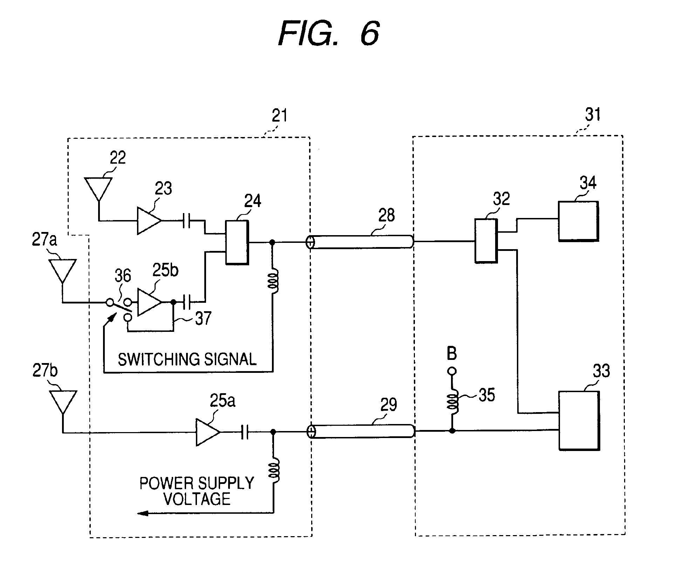

Figs. 5 and 6 illustrate third and fourth embodiments corresponding to Figs. 1 and 2, respectively. At least one LNA 25b and at least the other LNA 25a are positioned conversely, so that the positions, at which the variable attenuator 26 and the bypass circuit 37 are inserted, are changed. That is, in Fig. 5, the terrestrial digital broadcasting signals output from the first antenna 27a are input to at least the first LNA 25b through the variable attenuator 26, and the signals output from the first LNA 25b are input to the multiplexer 24. In addition, the terrestrial digital broadcasting signals output from the first antenna 27b are input to at least the other first LNA 25a, and the signals output from the first LNA 25a are output to the second cable 29.

The AGC voltage is supplied to the variable attenuator 26 through the first cable 28, and the power supply voltage is respectively supplied to the LNAs 23 and 25 through the second cable 29.

Referring to Fig. 6, instead of the variable attenuator 26 illustrated in Fig. 5, the switching unit 36 and the bypass circuit 37 are provided. Further, switching signals are supplied to the switching unit 36 through the first cable 28. The other structure according to the fourth embodiment is the same as that shown in Fig. 5.

According to the aspect of the invention, the terrestrial digital broadcasting signals output from the respective first low-noise amplifiers are input to the first reception processing unit through separate cables, and the satellite signals output from the second low-noise amplifier are input to the second reception processing unit through one of the cables. Further, when only the level of the first electric wave is equal to or greater than a predetermined value, the level of the terrestrial digital broadcasting signals to be input to at least one of the first low-noise amplifiers is lowered or becomes zero. Furthermore, the terrestrial digital broadcasting signals are input to at least the other first low-noise amplifier without changing the level of the terrestrial digital broadcasting signal, independently of level changes of the first electric wave. Therefore, the number of used cables decreases. At the time of diversity reception of the terrestrial digital broadcasting signals, distortion can be prevented in a strong electric field, and the synchronization can be maintained in a weak electric field.

According to the aspect of the invention, a variable attenuator is disposed on the front end of at least one of the first low-noise amplifiers, and an AGC voltage generating circuit is disposed in the first reception processing unit, the AGC voltage generating circuit generating an AGC voltage whose voltage changes when the level of the first electric wave is equal to or greater than the predetermined value. In this case, attenuation of the variable attenuator is controlled by the AGC voltage. Therefore, distortion can be prevented by lowering the level of the terrestrial digital broadcasting signals to be input to the first low-noise amplifiers in the strong electric field.

According to the aspect of the invention, a bypass circuit for bypassing the first low-noise amplifier is provided in at least one of the first low-noise amplifiers so as to be parallel to the corresponding first low-noise amplifier. Further, when only the level of the first electric wave is equal to or greater than the predetermined value, the terrestrial digital broadcasting signals are not input to at least one of the first low-noise amplifiers and are output through the bypass circuit. Therefore, distortion can be prevented because the terrestrial digital broadcasting signals are not input to the first low-noise amplifier in the strong electric field.

According to the aspect of the invention, a unitized antenna module has at least the first and second low-noise amplifiers, a power supply unit for superimposing a power supply voltage on one of the cables is disposed on the output side of the cable, and a power is supplied to the first and second low-noise amplifiers through the corresponding cables. Therefore, connection between the antenna module and the reception processing unit becomes simplified, so that mounting of the receiving apparatus on the vehicle can be simplified.

According to the aspect of the invention, the second antenna is an antenna that receives a GPS electric wave, and the second antenna is provided in the antenna module. Therefore, the antenna module can be made small-sized.

According to the aspect of the invention, the antenna module and the first antenna are mounted on an inner side of a front glass or a rear glass of a vehicle. Therefore, the vehicle-mounted receiving apparatus can be formed by only connecting the antenna module to the reception processing units through the cables.

According to the aspect of the invention, two of the first antennas are provided, and the two first antennas are separately mounted on both sides of the antenna module. Therefore, diversity reception can be performed.

## Claims

1. A vehicle-mounted receiving apparatus comprising:
at least two first antennas (27a, 27b) that receive a first electric wave for terrestrial digital broadcasting;
first low-noise amplifiers (25a, 25b) that are respectively disposed so as to correspond to the first antennas (27a, 27b);
a first reception processing unit (33) that synthesizes terrestrial digital broadcasting signals output from the respective first low-noise amplifiers (25a, 25b) at the highest ratio;
a second antenna (22) that receives a second electric wave transmitted from a satellite with a frequency different from the first electric wave;
a second low-noise amplifier (23) that is disposed so as to correspond to the second antenna (22); and
a second reception processing unit (34) that processes satellite signals output from the second low-noise amplifier (23),
**characterized in that** the terrestrial digital broadcasting signals output from the respective first low-noise amplifiers (25a, 25b) are input to the first reception processing unit (33) through separate cables (28, 29),
the satellite signals output from the second low-noise amplifier (23) are input to the second reception processing unit (34) through one (28) of the cables (28, 29),
when only the level of the first electric wave is equal to or greater than a predetermined value, the level of the terrestrial digital broadcasting signals to be input to at least one (25b) of the first low-noise amplifiers (25a, 25b) is lowered or becomes zero, and
the terrestrial digital broadcasting signals are input to at least the other first low-noise amplifier (25a) without changing the level of the terrestrial digital broadcasting signal, independently of level changes of the first electric wave.

2. The vehicle-mounted receiving apparatus according to claim 1,
**characterized in that** a variable attenuator (26) is disposed on a front end of at least one (25b) of the first low-noise amplifiers (25a, 25b), an AGC voltage generating circuit is disposed in the first reception processing unit (33), the AGC voltage generating circuit generating an AGC voltage whose voltage changes when the level of the first electric wave is equal to or greater than the predetermined value, and
attenuation of the variable attenuator (26) is controlled by the AGC voltage.

3. The vehicle-mounted receiving apparatus according to claim 1 or 2,
**characterized in that** a bypass circuit (37) for bypassing the low-noise amplifier (25b) is provided in at least one (25b) of the first low-noise amplifiers (25a, 25b) so as to be parallel to the corresponding low-noise amplifier (25b),
when only the level of the first electric wave is equal to or greater than the predetermined value, the terrestrial digital broadcasting signals are not input to at least one (25b) of the first low-noise amplifiers (25a, 25b) and are output through the bypass circuit (37).

4. The vehicle-mounted receiving apparatus according to any of claims 1-3,
**characterized in that** a unitized antenna module (21) has at least the first and second low-noise amplifiers (25a, 25b, 23),
a power supply unit (35) for superimposing a power supply voltage on one (28) of the cables (28, 29) is disposed at the output side of the corresponding cable (28), and
a power is supplied to each of the first and second low-noise amplifiers (25a, 25b, 23) through the corresponding cable (28).

5. The vehicle-mounted receiving apparatus according to claim 4,
**characterized in that** the second antenna (22) is an antenna that receives a GPS electric wave, and
the second antenna (22) is provided in the antenna module (21).

6. The vehicle-mounted receiving apparatus according to claim 4 or 5,
**characterized in that** the antenna module (21) and the first antennas (27a, 27b) are mounted on an inner side of a front glass or a rear glass of a vehicle.

7. The vehicle-mounted receiving apparatus according to claim 6,
**characterized in that** two of the first antennas (27a, 27b) are provided, and the two first antennas (27a, 27b) are separately mounted on both sides of the antenna module (21).

8. Vehicle having a front glass and a rear glass and comprising a vehicle-mounted apparatus according to any of claims 1-5,
**characterized in that** the antenna module (21) and the first antennas (27a, 27b) are mounted on an inner side of the front glass or the rear glass of the vehicle.

9. Vehicle according to claim 8,
**characterized in that** two of the first antennas (27a, 27b) of the vehicle-mounted receiving apparatus are provided and the two first antennas (27a, 27b) are separately mounted on both sides of the antenna module (21).
